# EUROPÄISCHE PATENTSCHRIFT

(11) **EP 2 986 174 B1**
(45) Veröffentlichungstag und Bekanntmachung des Hinweises auf die Patenterteilung: **12.10.2022**
(21) Anmeldenummer: 14723002.3
(22) Anmeldetag: 15.04.2014
(51) Int. Cl.: A41D 27/08, A45C 1/02, B29C 65/48, A45C 3/02, B29L 31/48, B29C 65/02, B29C 65/50, B29L 31/00, B29L 9/00

(54) **VERFAHREN ZUR HERSTELLUNG EINES ARTIKELS**
METHOD FOR THE PRODUCTION OF AN ITEM
PROCÉDÉ DE FABRICATION D'UN ARTICLE

(30) Priorität: 15.04.2013 DE 102013206639
(43) Veröffentlichungstag der Anmeldung: 24.02.2016
(73) Patentinhaber: Löster, Harry, 73434 Aalen (DE)
(72) Erfinder: Löster, Harry, 73434 Aalen (DE)
(74) Vertreter: Schmid, Wolfgang
(86) Internationale Anmeldenummer: PCT/EP2014/057580
(87) Internationale Veröffentlichungsnummer: WO 2014/170305

(56) Entgegenhaltungen:
- WO-A1-96/24490
- WO-A2-2006/108060
- US-A1- 2006 250 695

## Beschreibung

Die Erfindung betrifft ein Verfahren zur Herstellung eines Artikels aus einem weichen Material, insbesondere einem textilen Material, Leder oder dergleichen.

Aus dem allgemeinen Stand der Technik sind Textilien, wie beispielsweise T-Shirts, Jeans oder auch Unterbekleidung in den verschiedensten Ausführungen bekannt. Im Zuge verschiedener Modetrends haben sich solche Textilien immer wieder verändert, und zwar sowohl was deren Materialien als auch deren äußere Erscheinung anbelangt.

Dasselbe gilt auch für Accessoires wie Taschen oder Schulranzen, die häufig wechselnden Modetrends unterliegen.

Wenn bestimmte Motive beispielsweise auf T-Shirts, Taschen oder dergleichen aufgebracht werden sollen, so können unterschiedliche Druckverfahren zum Einsatz kommen, auf die hier jedoch nicht ausführlich eingegangen werden soll.

WO 96/24490 A1 zeigt ein Verfahren zum Drucken von Bildern auf linsenförmige Kunststoffe und Verbinden dieser mit einem Fasersubstrat zur Bildung eines Laminats durch gemeinsame Verwendung eines Haftklebstoffs und eines wärmeempfindlichen Klebstoffs oder durch Schweißen ohne oder mit einem Klebstoff (Klebstoffe), um Bekleidungsartikel oder andere Faserartikel herzustellen, die ein fotorealistisches Erscheinungsbild eines 3D-Bildes oder eines animierten Bildes oder eines Stereogramms oder eines Hologramms besitzen. Ein Verfahren zum Erzielen von brillanten und scharfen 2-D-Druckbildern auf nichtlinsenförmigen Kunststoffen und Verbinden dieser mit einem Fasersubstrat zur Bildung eines Laminats durch gemeinsame Verwendung eines Haftklebstoffs und eines wärmeempfindlichen Klebstoffs oder durch Schweißen ohne oder mit einem Klebstoff zur Herstellung von Bekleidungsartikeln oder anderen Faserartikeln, die ein fotorealistisches 2-D-Bild besitzen.

WO 2006/108060 A2 betrifft Bekleidungsartikel und Softgoods mit einem linsenförmigen Bildstück und Verfahren zum Anbringen des Stücks an solchen Artikeln. Ein Lentikularstück wird durch RF-Schweißen am Gewebematerial befestigt. Das Stück wird aus einem Polymer hergestellt, das starr ist und dennoch RF-geschweißt werden kann. Das Stück wird dann durch ein HF-Schweißwerkzeug mit mindestens einer erhöhten Schweißkante an den Gegenstand geschweißt. Eine andere Ausführungsform umfasst das Platzieren flexibler Polymerfilme zwischen dem Gegenstand und dem Stück und auf dem Stück. In einer Ausführungsform umfasst das Schweißwerkzeug eine innere Schweißkante und eine äußere Schweißkante, und das Stück ist so gestanzt, dass der Durchmesser des Stücks größer ist als der der inneren Kante, jedoch geringer als der der äußeren Kante.

Die DE 27 30 785 A1 beschreibt ein optisches System mit einem durchsichtigen Flächengebilde, das auf der einen Seite mit einer ebenen Fläche und auf der entgegengesetzten Seite mit zahlreichen parallelen Rasterlinsenrippen ausgebildet ist. Im Bereich der ebenen Fläche des durchsichtigen Flächengebildes ist ein Teilbild vorgesehen, das aus mehreren in Abständen voneinander angeordneten parallelen Streifen besteht, die Bildzeilen bilden und zwischen denen durchsichtige Streifen angeordnet sind, durch die das Licht hindurchtreten kann. Das optische System kann unter anderem auf Uhren oder Kleidungsstücken angeordnet sein.

Aus der US 2009/0153959 A1 ist ein Verbundlinsenrasterfilm mit einer ersten Schicht mit einem ersten Brechungsindex und einer zweiten Schicht mit einem zweiten Brechungsindex bekannt, der kleiner als der erste Brechungsindex ist. Die erste Schicht weist wenigstens eine Reihe von hervorstehenden Linsen auf; die zweite Schicht ist einstückig mit der ersten Schicht ausgeführt. Der Verbundlinsenrasterfilm kann unter anderem an einem Gewebe angebracht werden.

Die DE 10 2010 009 906 A1 beschreibt ein Verfahren zur Rasterung von Farbauszügen eines Lentikularbildes mit einer Lentikularfrequenz der für die Betrachtung des Lentikularbildes erforderlichen Lentikularlinsen.

Die US 2006/0250696 A1 bezieht sich auf eine Anzeigevorrichtung, die einen Off-Axis-Kombinierer und zwei Kunststofflinsen aufweist. Eine der Linsen ist ein rotationssymmetrisches optisches Element und die andere Linse ist ein nichtrotationssymmetrisches optisches Element.

Die DE 20 2009 002 186 U1 beschreibt eine Tasche, insbesondere eine Umhängetasche, mit mindestens einem flachen Einsteckfach, wobei mindestens eine der Wandungen des einen Einsteckfachs mindestens bereichsweise durchsichtig ist und eine Außenwand der Tasche bildet.

Es ist Aufgabe der vorliegenden Erfindung, ein Verfahren zur Herstellung eines Artikels aus einem weichen Material, insbesondere einem textilen Material, Leder oder dergleichen, zu schaffen, das neue Gestaltungsmöglichkeiten bietet.

Erfindungsgemäß wird diese Aufgabe durch die in Anspruch 1 genannten Merkmale gelöst.

Durch den Lentikulardruck auf zumindest einem Abschnitt der Oberfläche des Artikels lässt sich ein völlig neuer Effekt auf einem derartigen Artikel aus einem weichen Material, wie beispielsweise einem textilen Material, Leder oder dergleichen, realisieren. Der Artikel eröffnet eine Vielzahl von Gestaltungsmöglichkeiten, die bislang nicht bekannt waren. So lassen sich neben T-Shirts, Sweatshirts, Jacken, Hosen und dergleichen auch Taschen oder Schulranzen mit einem derartigen Lentikular-druck versehen, wodurch der Wert solcher Artikel erheblich gesteigert werden kann.

Um eine sichere Verbindung des Lentikulardrucks mit dem Artikel herzustellen, ist vorgesehen, dass der Lentikulardruck mittels einer Klebeschicht mit dem Artikel verbunden ist.

Des Weiteren ist vorgesehen, dass die Klebeschicht ein Klebemittel aufweist, welches eine Verarbeitungstemperatur von maximal 120 °C aufweist. Ein solches Klebemittel mit einer derartigen, niedrigen Verarbeitungstemperatur ermöglicht eine sichere Verbindung des Lentikulardrucks mit dem Artikel, ohne dass die die Linsen und/oder Prismen aufweisende Deckschicht beschädigt werden kann.

Es kann vorgesehen sein, dass der Lentikulardruck eine Abbildung und eine die Abbildung abdeckende Deckschicht mit Linsen und/oder Prismen aufweist. Auf diese Weise stellt sich der vorteilhafte Effekt eines solchen Lentikular- oder Linsen- bzw. Prismendrucks bzw. -bilds, nämlich die Erzeugung einer dreidimensionalen Wirkung oder eines Wackel- bzw. Wechselbilds, auf besonders vorteilhafte Art und Weise ein.

Mit dem erfindungsgemäßen Verfahren kann der Artikel auf eine einfache und zuverlässige Art und Weise hergestellt werden.

Um eine sichere Verbindung zwischen dem Lentikulardruck und dem Artikel zu erzielen, ist vorgesehen, dass der Lentikulardruck auf die Oberfläche aufgeklebt wird.

Des Weiteren ist bei dem erfindungsgemäßen Verfahren vorgesehen, dass vor dem Aufkleben des Lentikulardrucks eine Abbildung auf einer Unterlage aufgebracht und mit einer Linsen und/oder Prismen aufweisenden Deckschicht abgedeckt wird. Dadurch kann der Lentikulardruck bzw. das Lentikularbild sehr einfach mit dem Artikel verbunden werden.

Dadurch, dass außerdem vorgesehen ist, dass der Lentikulardruck mittels eines Klebemittels aufgeklebt wird, welches eine Verarbeitungstemperatur von maximal 120 °C aufweist, wird eine ausreichend feste Verbindung des Lentikulardrucks mit dem Artikel erreicht, ohne dass Gefahr besteht, dass die die Linsen und/oder Prismen aufweisende Deckschicht beschädigt wird.

Nachfolgend sind Ausführungsbeispiele der Erfindung anhand der Zeichnung prinzipmäßig dargestellt.

Es zeigt:
- Fig. 1: eine erste Ausführungsform des mit dem erfindungsgemäßen Verfahren hergestellten Artikels;
- Fig. 2: eine zweite Ausführungsform des mit dem erfindungsgemäßen Verfahren hergestellten Artikels;
- Fig. 3: eine erste Ausführungsform eines erfindungsgemäßen Verfahrens zur Herstellung des Artikels aus Fig. 1 oder Fig. 2; und
- Fig. 4: eine nicht zu der Erfindung gehörende Ausführungsform eines Verfahrens zur Herstellung des Artikels aus Fig. 1 oder Fig. 2.

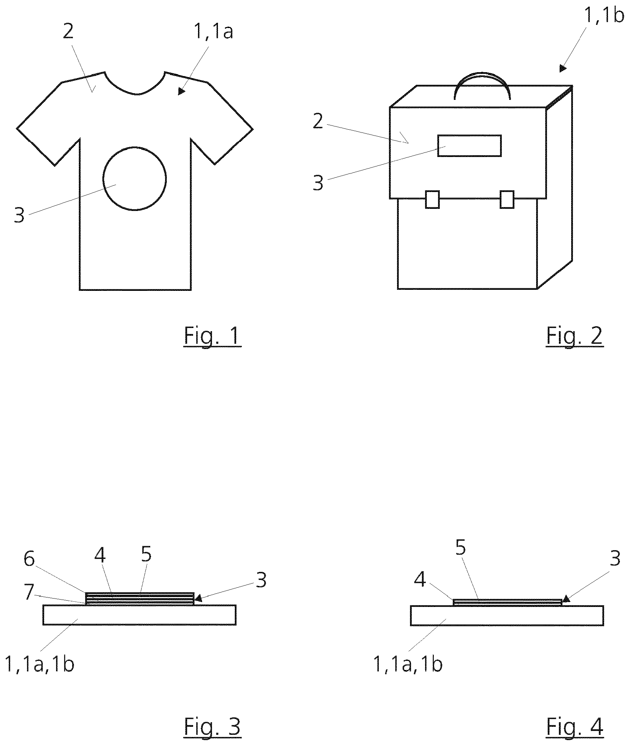

Fig. 1 zeigt einen Artikel 1 aus einem weichen Material, im vorliegenden Fall ein T-Shirt 1a. Das T-Shirt 1a besteht aus einem textilen Material, wie beispielsweise Baumwolle, Polyester, Polyamid oder einem anderen üblicherweise für T-Shirts verwendeten Material. Alternativ könnte es sich bei dem als Bekleidungsstück ausgebildeten Artikel 1 auch um ein Sweatshirt, ein Hemd, eine Hose, eine Jacke, ein Unterbekleidungsstück, eine Schwimmbekleidung oder ein anderes Bekleidungsstück handeln. Je nach Anwendungszweck kommt dabei ein geeignetes textiles Material oder gegebenenfalls auch Leder zum Einsatz.

Der Artikel 1 bzw. im konkreten Ausführungsbeispiel das T-Shirt 1a weist zumindest auf einem Abschnitt seiner Oberfläche 2 einen Lentikulardruck 3 auf. Ein solcher Lentikulardruck 3, der grundsätzlich bekannt ist, wird auch als Linsen- oder Prismendruck bzw. als Lentikularbild, Linsenbild oder Prismenbild bezeichnet. Im vorliegenden Fall befindet sich der Lentikulardruck 3 auf der Vorderseite des T-Shirts, es wäre jedoch auch möglich, denselben an einer anderen Stelle des T-Shirts 1a anzubringen. In Fig. 1 ist kein Motiv des Lentikulardrucks 3 dargestellt, da grundsätzlich jedes Motiv zum Einsatz kommen kann.

In Fig. 2 ist ein weiterer Artikel 1 dargestellt, der in diesem Fall als Schulranzen 1b ausgebildet ist, auf dessen Oberfläche 2 sich ebenfalls ein Lentikulardruck 3 befindet. Selbstverständlich kann der Lentikulardruck 3 in beiden Fällen eine beliebige äußere Form aufweisen. Für den Lentikulardruck 3 des Schulranzens 1b gilt dasselbe wie oben für den Lentikulardruck 3 des T-Shirts 1a ausgeführt wurde. Der Schulranzen 1b kann aus einem textilen Material, insbesondere einer Kunstfaser, jedoch auch aus PVC, aus Leder oder einem anderen geeigneten, weichen Material bestehen. Statt als Schulranzen 1b kann der Artikel 1 auch als Tasche, wie beispielsweise als Umhängetasche, Handtasche, oder auch als Rucksack oder dergleichen ausgeführt sein. Insbesondere bei dem Schulranzen 1b bzw. allgemein bei einer Tasche oder einem ähnlichen Accessoire kann der Lentikulardruck 3 zusätzlich noch mit einer nicht dargestellten Naht eingefasst werden.

Mit dem Begriff "weiches Material" ist jedes Material gemeint, das eine gewisse Elastizität bzw. Biegbarkeit aufweist. Wenn, wie dies beispielsweise bei dem Schulranzen 1b der Fall sein kann, dieses Material durch zusätzliche Maßnahmen oder Elemente versteift wurde, beispielsweise durch das Einschieben von Kartonagen oder ähnlichem, so wird dies dennoch als "weiches Material" angesehen, da die Oberfläche 2 des Artikels 1 unverändert ist. Grundsätzlich wäre es auch möglich, den Lentikulardruck 3 auf einem Artikel aus einem harten Material aufzubringen, wie zum Beispiel auf einem Serviertablett oder einer Thermoskanne.

In den Figuren 3 und 4 sind zwei unterschiedliche Arten der Aufbringung des Lentikulardrucks 3 auf den Artikel 1 dargestellt. Jedes der nachfolgend beschriebenen Verfahren bzw. jede der Ausführungsformen des Lentikulardrucks 3 kann sowohl bei dem T-Shirt 1a als auch bei dem Schulranzen 1b bzw. bei sämtlichen anderen denkbaren Artikeln 1 zum Einsatz kommen.

Beiden Ausführungen der Figuren 3 und 4 ist gemeinsam, dass der Lentikulardruck 3 jeweils auf einem flexiblen Untergrund aufgebracht wird und eine Abbildungsschicht bzw. Abbildung 4 und eine Deckschicht 5 mit nicht näher dargestellten Linsen und/oder Prismen aufweist. Die Abbildung 4 stellt das sichtbare Bild des Lentikulardrucks 3 dar. Die Deckschicht 5 sorgt mit den Linsen und/oder Prismen für den speziellen Effekt des Lentikulardrucks 3, nämlich einen dreidimensionalen Effekt oder den Effekt eines sogenannten Wackel- oder Wechselbilds. Bei den Wechselbildern kann der sogenannte Morphing-Effekt auftreten. Der durch die Linsen und/oder Prismen hervorgerufene Effekt ergibt sich durch die Veränderung des Blickwinkels eines Betrachters auf die Oberfläche des Lentikulardrucks 3.

Bei der in Fig.3 dargestellten Ausführungsform befindet sich die Abbildung 4 auf einer Unterlage 6, auf welche sie beispielsweise aufgedruckt wurde. Die Unterlage 6 kann beispielsweise aus Polypropylen, PVC oder einem anderen geeigneten Material, insbesondere Kunststoff, bestehen. Die hierzu eingesetzten Druckverfahren können an sich bekannt sein und werden aus diesem Grund hierin nicht näher beschrieben. Nach dem Aufbringen der Abbildung 4 auf der Unterlage 6 wird über die Abbildung 4 die Deckschicht 5 aufgebracht. Die Kombination aus der Unterlage 6, der Abbildung 4 und der Deckschicht 5 wird dann mittels einer Klebeschicht 7 mit dem Artikel 1 verbunden, d.h. verklebt.

Die Klebeschicht 7 weist ein Klebemittel auf, das vorzugsweise eine Verarbeitungstemperatur von maximal 120 °Celsius aufweist, bzw. besteht aus einem derartigen Klebemittel. Mit anderen Worten, zum Verkleben des die Unterlage 6, die Abbildung 4 und die Deckschicht 5 umfassenden Lentikulardrucks 3 wird der Artikel 1 und/oder der Lentikulardruck 3 mit einer Temperatur von bis zu 120 °Celsius beaufschlagt, um das Klebemittel der Klebeschicht 7 zu aktivieren und eine sichere Klebeverbindung herzustellen. Beim Verkleben wird die Klebeschicht 7 vorzugsweise auf die Unterlage 6 aufgebracht, wonach die Unterlage 6 auf den Artikel 1 oder gepresst wird. Selbstverständlich ist es jedoch auch möglich, die Klebeschicht 7 auf den Artikel 1 aufzubringen.

Bei dem für die Klebeschicht 7 verwendeten Klebemittel handelt es sich insbesondere um einen niedrigviskosen Klebstoff mit einer guten Hydrolysebeständigkeit, hoher Wärmebeständigkeit, guter Kälteflexibilität und einem weichen, textilen Griff. Die Dichte des Klebemittels kann ca. 1,2 g/cm³, die Viskosität ca. 10.000mPas bei 100°C und 5.000mPas bei 120°C betragen.

Bei der in Fig.4 dargestellten, nicht zu der Erfindung gehörenden Ausführungsform wird die Abbildung 4 direkt auf die Oberfläche 2 des Artikels 1 aufgebracht und anschließend mit der Deckschicht 5 abgedeckt. Die Linsen und/oder Prismen können gleichzeitig mit dem Aufbringen der Deckschicht 5 in bzw. auf derselben erzeugt werden. Zum Erzeugen der Linsen und/oder Prismen kann ein Werkzeug eingesetzt werden, das die in diesem Fall flüssige Deckschicht 5 verformt und dabei die Linsen und/oder Prismen bildet. Bei der Ausführungsform von Fig.4 ist der Lentikulardruck 3 demnach direkt auf die Oberfläche 2 des Artikels 1 aufgebracht und es kann sowohl auf die Unterlage 6 als auch auf die Klebeschicht 7 verzichtet werden.

## Patentansprüche

1. Verfahren zur Herstellung eines Artikels aus einem weichen Material, insbesondere einem textilen Material, Leder oder dergleichen, wobei auf zumindest einen Abschnitt der Oberfläche (2) des Artikels (1) ein Lentikulardruck (3) aufgebracht wird,
**dadurch gekennzeichnet, dass**
der Lentikulardruck (3) auf die Oberfläche (2) aufgeklebt wird, wobei vor dem Aufkleben des Lentikulardrucks (3) eine Abbildung (4) auf einer Unterlage (6) aufgebracht und mit einer Linsen und/oder Prismen aufweisenden Deckschicht (5) abgedeckt wird, und wobei der Lentikulardruck (3) mittels eines Klebemittels (7) aufgeklebt wird, welches eine Verarbeitungstemperatur von maximal 120 °C und eine Viskosität von ca. 10.000 mPas bei 100°C und 5.000 mPas bei 120°C aufweist.

## Claims

1. Method for the production of an article made of a soft material, in particular a textile material, leather or the like, a lenticular print (3) being applied to at least one section of the surface (2) of the article (1),
**characterized in that**
the lenticular print (3) is adhesively bonded to the surface (2), wherein, before the adhesive bonding of the lenticular print (3), an image (4) is applied to an underlayer (6) and covered with a covering layer (5) having lenses and/or prisms, and wherein the lenticular print (3) is adhesively bonded on by means of an adhesive (7) which has a processing temperature of at most 120 °C and a viscosity of about 10,000 mPas at 100 °C and 5000 mPas at 120 °C.

## Revendications

1. Dispositif de fabrication d'un article (1) en matière souple, comme par exemple en matière textile ou en cuir sur lequel est apposé sur une partie au moins de sa surface (2) une impression lenticulaire (3).
La particularité étant que cette impression lenticulaire (3) est collée sur la surface (2) et qu'avant le collage, une image (4) est placée sur un support (6) et recouverte d'un film (5) muni d'une lentille et/ou de prismes et qu'ensuite cette impression lenticulaire (3) est collée grâce à une colle adhésive haute température (7) correspondant à une température de répandage de 120° max. et d'un degré de viscosité d'environ 10.000 mPas pour une température de 100° et de 5.000 mPas pour une température de 120°.
